# EUROPEAN PATENT APPLICATION

(11) **EP 4 582 249 A1**
(43) Date of publication of application: **09.07.2025**
(21) Application number: 23891470.9
(22) Date of filing: 10.11.2023
(51) Int. Cl.: B32B 5/26, B32B 7/027, H01M 10/625, H01M 10/658

(54) **FLAME-SHIELDING HEAT-INSULATING LAMINATE AND FLAME-SHIELDING HEAT-INSULATING STRUCTURE USING SAME**

(30) Priority: 15.11.2022 JP 2022182339
(71) Applicant: Imae Industries, Ltd., Takatsuki-shi Osaka 569-0012 (JP)
(72) Inventor: IMAE, Kenji, Takatsuki-shi, Osaka 569-0012 (JP); IMAE, Yoshihiko, Takatsuki-shi, Osaka 569-0012 (JP); SHIRAI, Takashi, Takatsuki-shi, Osaka 569-0012 (JP); ARAI, Tetsuro, Takatsuki-shi, Osaka 569-0012 (JP)
(74) Representative: Isarpatent
(86) International application number: PCT/JP2023/040510
(87) International publication number: WO 2024/106321

(57) **Abstract**

The present invention provides a sheet-like thermal insulating material (flame barrier insulating laminate) that is shapable into a three-dimensional and has excellent handling properties, and a thermal insulating structure with a three-dimensional shape made from the laminate. The flame barrier insulating laminate comprises at least one flame barrier insulating layer and one prepreg layer. The flame barrier insulating layer is made of a sheet having a thickness of 0.1 to 3.0 mm, in which inorganic fibers with a heat resistance temperature of 1000°C or higher are entangled in a random direction. The prepreg layer is a prepreg sheet in which an inorganic fiber base fabric is impregnated with a semi-cured thermosetting resin. The thermosetting resin of the prepreg layer in the flame barrier insulating laminate is fully cured, resulting in a flame barrier insulating structure with a desired shape.

## Description

### TECHNICAL FIELD

The present invention relates to a flame barrier insulating laminate sheet that is easy to handle and shape into a durable three-dimensional. The present invention also relates to a flame barrier insulating structure made of the flame barrier insulating laminate sheet, with a cylindrical shape, or a three-dimensional shape having uneveness, slit, or bends.

### BACKGROUND

For applications exposed to sparks and temperatures of 700°C or higher, an inorganic structure made from inorganic fibers is commonly used. The inorganic structure has a desired shape formed by processing and/or sewing a sheet or fabric such as woven fabric, nonwoven fabric, and paper.

As a current use of the sheet for the above-mentioned application, a thermal runaway suppression sheet is known. The thermal runaway suppression sheet is interposed between lithium ion secondary batteries (battery cells) arranged in a battery module used as a power source for the electric motors driving an electric vehicle or hybrid electric vehicle.

WO2019/187313 (Patent Document 1) suggests a thermal insulating sheet contained in a battery pack where multiple battery cells are fixed in a stacked state. The thermal insulating sheet is an inorganic fiber sheet where inorganic particles (inorganic hollow particles or inorganic foamed particles) are embedded in a gap between inorganic fibers. Examples of inorganic fibers are magnesium silicate (sepiolite), rock wool, ceramic fiber, glass fiber, potassium titanate fiber, and calcium silicate.

In addition, JP2021-531631A (Patent Document 2) suggests a flame-resistant insulating material comprising two kinds of glass fibers having a different diameter from each other; a particulate filler mixture of at least two selected from the group consisting of glass bubbles, kaolin clay, talc, mica, calcium carbonate and alumina trihydrate; and an inorganic binder. The insulating material is provided in the form of sheet made by papermaking technique.

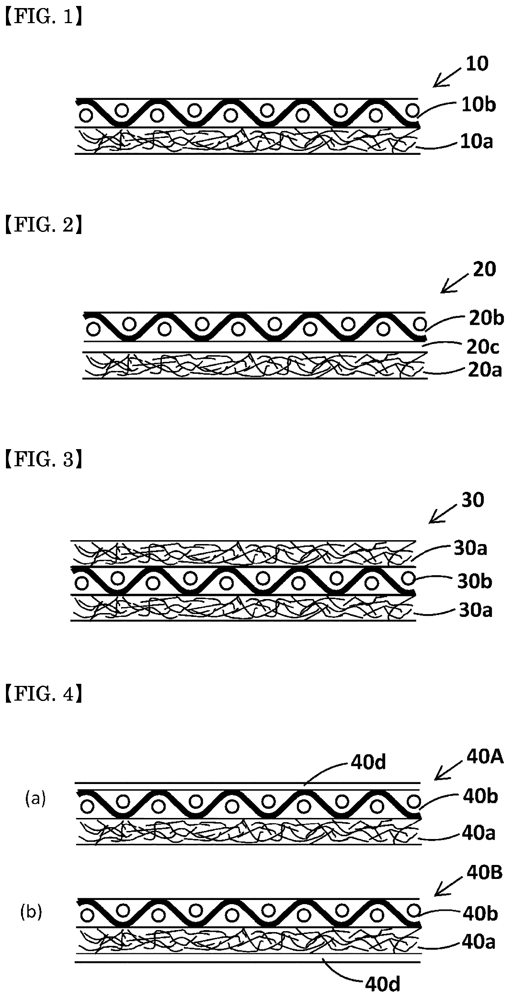

Patent Document 2 also proposes the uses of the insulating sheet: sandwiching the insulating sheet between stacked battery cells (Figure 1), and attaching the insulating sheet to one side of a housing that accomodates a battery module made up from multiple stacked batteries (Figure 2). The Patent Document 2 also discloses that the insulating sheet is laminated on an inorganic fabric to secure the strength.

On the other hand, there is a demand to shape a thermal insulating sheet into a desired shape, often a three-dimensional form, to fit a specific application. For example, a sheet may be placed on top of parallel-connected batteries to prevent expansion of thermal runaway occurred in a battery module. The battery's upper part may have a terminal protrusion or a stepped structure, requiring the insulating sheet to fit precisely. However, the thermal insulating sheet proposed in the above documents is flexible and lack stiffness, making it difficult for them to maintain a three-dimensional shape once formed.

JP2019-148031A (Patent Document 3) suggests a method for producing a structure having a three-dimensional form from an insulating sheet made of inorganic fibers. According to the method, an inorganic binder such as colloidal silica is applied, sprayed or impregnated onto one side of an inorganic substrate created by entangling silica-based fibers, heating and pressing into a desired three-dimensional form.

Also, WO2021/095279 (Patent Document 4) suggests a method for producing a composite insulating material that is thin but has excellent insulating properties at high temperatures. The method comprises sandwiching a mixture of inorganic particles (e.g. silica aerogel) exhibiting an insulating effect and silica-based staple fibers with a fiber length of 0.5 to 5 mm, between first and second substrates composed of silica-based fibers; and heating and pressing the sandwiched body using a die to form into a predetermined shape.

In Patent Document 4, silica-based fiber, which is a constituent of the first and second substrates, and the silica-based staple fiber in the sandwiched body are thermally fused under pressure, thereby producing a structure having a stable three-dimensional form.

### PRIOR ART

### PATENT DOCUMENT

Patent Document 1: WO2019/187313
Patent Document 2: JP2021-531631A
Patent Document 3: JP2019-148031A
Patent Document 4: WO2021/095279

### SUMMARY OF THE INVENTION

### TECHNICAL PROBLEM TO BE SOLVED BY THE INVENTION

According to the disclosures in the Patent Documents 1 and 2, a paper or sheet with excellent thermal insulating properties can be obtained by molding it using a slurry which contains inorganic fibers, and, optionally, inorganic particles exerting a thermal insulating effect, but there is no disclosure of the production of a three-dimensional molded article from the sheet. In addition, a three-dimensional form cannot be made by only conducting a simple wet molding.

The methods described in the Patent Documents 3 and 4 can produce a thermal insulating material composed of mostly inorganic fibers with a three-dimensional form. However, the substrates used in Patent Document 3 is a needlepunched mat with a thickness of 3 to 10 mm, which is relatively thick. For example, the thermal insulating material prepared in the example in Patent Document 4 comprises an insulating layer sandwiched between two substrates, and has a thickness of 8 mm. Therefore, the insulating material is required to reduce the thickness to meet the demand for a thinner material.

Furthermore, the insulating materials suggested in Patent Documents 3 and 4 are shaped into a desired three-dimensional form using an inorganic binder or using staple fibers sandwiched between substrates, making it rare in the market as a standalone insulating sheet that can be molded into various shapes.

Under these situations, the purpose of the invention is to provide a sheet-like flame barrier insulating material with excellent handling properties when being shaped into a three-dimensional, and a flame barrier insulating structure with a given three-dimensional shape created from the sheet material.

### MEANS FOR SOLVING THE PROBLEM

According to the present invention, the embodiments of the flame barrier insulating laminate are the following:
(1) A moldable flame barrier insulating laminate comprises at least one flame barrier insulating layer and at least one prepreg layer, wherein the flame barrier insulating layer is a sheet with a thickness of 0.1 to 3.0 mm, in which inorganic fibers with a heat resistance temperature of 1000°C or higher are entangled in a random direction, and the prepreg layer is a sheet in which an inorganic fiber base fabric is impregnated with a semi-cured thermosetting resin.
(2) A flame barrier insulating laminate according to the embodiment (1), wherein the flame barrier insulating layer and the prepreg layer are bonded together.
(3) A flame barrier insulating laminate according to the embodiment (1) or (2), wherein the laminate has at least one surface composed of the flame barrier insulating layer, and a semi-cured thermosetting resin does not appear on the surface.
(4) A flame barrier insulating according to any one of the embodiments (1) to (3), wherein the inorganic fiber is a ceramic fiber or a glass fiber, each having a silica content of 40% by weight or more.
(5) A flame barrier insulating laminate according to any one of the embodiments (1) to (3), wherein the inorganic fiber comprises a silica fiber with an amorphous silica content of 85% by weight or more.
(6) A flame barrier insulating laminate according to the embodiment (5), wherein the silica fiber comprises a silica fiber containing hydroxyl groups.
(7) A flame barrier insulating laminate according to any one of the embodiments (1) to (6), wherein the flame barrier insulating layer contains a layered silicate.
(8) A flame barrier insulating laminate according to the embodiment (7), wherein the layered silicate contains a fibrous clay mineral particle.
(9) A flame barrier insulating laminate according to any one of the embodiments (1) to (8), wherein the flame barrier insulating layer further comprises an organic or inorganic binder, and wherein the flame barrier insulating layer is made of a sheet formed by a papermaking process.
(10) A flame barrier insulating laminate according to any one of the embodiments (1) to (9), wherein the prepreg layer is a sheet in which an inorganic fibrous woven fabric, nonwoven fabric, or paper is impregnated with a phenolic resin precursor.
(11) A flame barrier insulating laminate according to any one of the embodiments (1) to (10), wherein a thermal insulating inorganic particle is contained in the flame barrier insulating layer and/or the prepreg layer.

According to the present invention, a flame barrier insulating structure made from the flame barrier insulating laminate according to any one of the embodiments of (1) to (11) is further included. In the flame barrier insulating structure, the thermosetting resin of the prepreg layer contained in the laminate is fully cured.

The flame barrier insulating structure may be in a sheet form, a cylindrical form or a prismatic form, or may have a variety of three-dimensional forms having uneveness, groove, and bends.

According to another aspect of the flame barrier insulating structure made from the flame barrier insulating laminates of the embodiments (1) to (11), the thermosetting resin of the prepreg layer in is fully cured. The flame barrier insulating structure has a three-dimensional form with a recess serving as a flow path for a high temperature liquid to flow from one element among multiple elements arranged side by side, to an end of the elements, wherein the high temperature liquid sent out the element filled with high temperature liquid.

The term "prepreg" as used herein refers to a base fabric that servs reinforcing fiber, impregnated with a semi-cured thermosetting resin.

In this specification, "inorganic fiber with a heat resistance temperature of 1000°C or higher" refers to an inorganic fiber which can tolerate temperatures of 1000°C or higher, depending on usage conditions. In normal usage, inorganic fibers with a glass transition point or softening point of 1000°C or higher may be used as an "inorganic fibers with a heat resistance temperature of 1000°C or higher."

### EFFECT OF THE INVENTION

The flame barrier insulating laminate of the present invention can be distributed as a flexible sheet, and formed into a three-dimensional shape by a user using a die to achieve an intended shape. The resulting flame barrier insulating structure has flame-shielding and heat-insulating properties similar to those of a conventional insulator (e.g. thermal insulating sheet) made from inorganic materials.

### BRIEF DESCRIPTION OF THE DRAWINGS

Fig. 1 is a schematic diagram showing the configuration of one embodiment of a flame barrier insulating laminate.
Fig. 2 is a schematic diagram showing the configuration of another embodiment of the flame barrier insulating laminate.
Fig. 3 is a schematic diagram showing the configuration of another embodiment of the flame barrier insulating laminate.
Fig. 4 is a schematic diagram showing the configuration of another embodiment of the flame barrier insulating laminate.
Fig. 5 is a schematic diagram for explaining another embodiment of the flame barrier insulating laminate.
Fig. 6 is a diagram showing an example of a flame barrier insulating structure.
Fig. 7 is a schematic diagram for explaining an exemplary use of the flame barrier insulating structure.
Fig. 8 is a diagram showing another example of the flame barrier insulating structure.
Fig. 9 is a schematic diagram for explaining an exemplary use of the flame barrier insulating structure.
Fig. 10 is a schematic diagram for explaining an exemplary use of the flame barrier insulating structure (battery cover).
Fig. 11 shows the battery cover illustrated in Fig. 10 in the installed state.
Fig. 12 is a diagram showing a three-dimensional structure used in the evaluation test of three-dimensional formability.
Fig. 13 is a diagram for explaining the shape stability evaluation method conducted in the examples.
Fig. 14 is a diagram for explaining the flame test conducted in the examples.
Fig. 15 is a diagram for explaining the heat resistance test 2 conducted in the embodiment.

### EMBODIMENT FOR CARRYING OUT THE INVENTION

### < Flame barrier insulating laminate>

The flame barrier insulating laminate of the invention comprises at least one flame barrier insulating layer and one prepreg layer. The laminate is a semi-finished product used to create a flame barrier insulating structure with a specific shape fitting precisely. After a brief heat treatment, the laminate becomes a finished product with the desired form, such as a flat shape with cuts (e.g., slits), a cylindrical shape, or a three-dimensional shape with unevenness and bends.

### [Flame barrier insulating layer]

The flame barrier insulating layer is a layer included in the moldable flame barrier insulating laminate of the invention, and composed mostly of inorganic fibers with a heat resistance temperature of 1000°C or higher, and the inorganic fibers are randomly entangled. The flame barrier insulating layer comprises the following components.

### (1) Constituent components

### (1-1) Inorganic fiber with a heat resistance temperature of 1000°C or higher

The inorganic fiber as a main component of the flame barrier insulating layer has a heat resistance temperature of 1000°C or higher.

The term "inorganic fiber with a heat resistance temperature of 1000°C or higher" refers to an inorganic fiber with a glass transition point or softening point of 1000°C or higher. In general, as the glass transition point is lower than the softening point, an inorganic fiber having a glass transition point of 1000°C or higher may tolerate temperatures of 1000°C or higher. There are some inorganic fibers without a true glass transition point due to their composition or types. In that case, a softening point of 1000°C or higher may be adopted as an indicator for the heat tolerance.

Any type of inorganic fiber satisfying the above-mentioned definition may be used as the "inorganic fiber with a heat resistance temperature of 1000°C or higher". The inorganic fiber includes ceramic fiber, carbon fiber, silica fiber, metal fiber, biosoluble fiber, or glass fiber having very high heat tolerance. Two or more types of the inorganic fibers may be used in combination.

Examples of the metal fiber include stainless steel fiber, which has a heat resistance temperature of about 1400°C depending on the type. Metal fibers have a relatively high strength comparing to other inorganic fibers.

Carbon fibers are classified into polyacrylonitrile-based, pitch-based, and other carbon fibers by the kind of raw material, but each type of carbon fiber is crystalline like graphite, which consists of sheets of carbon atoms arranged in hexagonal pattern and stacked parallel to one another in layers. Carbon fiber has a heat resistance temperature of approximately 2000 to 2500°C, and is notably light weight, which is advantageous comparing to other inorganic fibers.

However, the metal fiber and carbon fiber are electrical conductivity, and therefore, another inorganic fiber may be preferably used in electrically insulating applications.

Examples of the ceramic fibers include alumina fiber (heat resistance temperature: about 1300 to 1700°C), mullite fiber (heat resistance temperature: about 1400 to 1500°C), alumina silicate fiber (heat resistance temperature in the case of a common content ratio of silicate to alumina being from 1:1 to 2:3: about 1000 to 1200°C, depending on the composition), boron nitride fiber (heat resistance temperature: about 2000 to 2400°C), silicon carbide fiber (heat resistance temperature: about 1200 to 1500°C), zirconia fiber (heat resistance temperature: about 2000 to 2200°C), and crystalline silica fiber. Since ceramic fibers have excellent corrosion resistance, they are used in applications having a chance exposed to chemicals. Preferably, alumina fiber is used because it is commercially available and has a high melting point.

These ceramic fibers have excellent oxidation resistance, and therefore, they are appropriate component in the flame barrier insulating layer used for applications that involves oxidizing atmosphere.

Examples of the biosoluble fiber include an alkaline earth silicate (AES) fiber (heat resistance temperature of about 1000°C) which contains silica in a content of 60 to 70% by weight, an alkali metal and an alkaline earth metal. It is considered a type of ceramic fiber in broad sense, but can be distinguished by their biosolubilty. The biosoluble fiber tends to shrink quickly when exposed to flame, which is why it is combined with other fibers in applications that involves prolonged exposure to high temperatures or flame, or in applications that involves repeated exposure to flame.

Highly heat-resistant glass fiber is a glass fiber which is improved in heat resistance by increasing alumina content as an ingredient other than silica. The silica content is usually from 40 to 60% by weight. T-glass (softening point 1050°C) is known as the highly heat-resistant glass fiber.

An amorphous fiber with at least 85% by weight of amorphous silica (SiO₂), preferably 85% by weight or more, 90% by weight or more, or 93% by weight or more, may also be used. Any fiber with high silica content and a heat resistance temperature of 1000°C or higher, may be used, regardless of the production method (e.g., acid treatment method, sol-gel method, etc.). The amorphous fiber differs from silica ceramic fibers due to no crystallinity. Since the amorphous silica fiber is not electrical conductivity, it is useful in applications requiring electrical and thermal insulation. Additionally, the amorphous silica fiber does not contain shot (non-fibrized matter) from the manufacturing process, and therefore, it is suitable for applications where the surface consisting of the flame barrier insulating layer is pressed against a material with low scratch resistance.

The amorphous silica fiber used in the invention is not particularly limited by their manufacturing method. A silica fiber having hydroxyl groups at its terminal and a heat-treated silica fiber can be used.

In the silica fiber with hydroxyl groups at its terminals, the hydroxyl groups can undergo a condensation reaction at around 300 to 800°C to form a siloxane bond (Si-O-Si bond). Additionally, the hydroxyl group may form a hydrogen bond with matrix resin, such as phenolic resin, used in the prepreg layer described below, and may also undergo dehydration condensation during the heat-curing process of the prepreg layer. The bonding of the hydroxyl groups can enhance the bonding strength between the prepreg layer and the flame barrier insulating layer. The water generated during the dehydration condensation absorbs thermal energy and evaporates, thereby consuming the thermal energy and lowering the surrounding temperature. Therefore, in applications aimed at preventing ignition due to thermal runaway in lithium ion secondary batteries, the amorphous silica fiber containing remaining hydroxyl groups may be preferred.

On the other hand, the silica fiber with hydroxyl groups may shrink when being heated. Therefore, in applications exposed to high temperatures or flame for extended periods, or repeated exposure to flames, a pre-heat treatment to reduce the amount of hydroxyl groups at the terminals is preferred. This pre-heat treatment helps minimize the silica fiber's shrinkage when exposed to high temperatures.

Examples of the silica fiber having hydroxyl groups at its terminal include BELCOTEX (registered trademark) available from BELCHEM GmbH. BELCOTEX (registered trademark) is an amorphous silica fiber made from silicic acid modified with alumina and generally contains 90 to 97% by weight silica, about 3 to 9% by weight alumina, less than 0.5% by weight sodium oxide, and less than 0.5% by weight other components (ZrO₂, TiO₂, Li₂O, K₂O, CaO, MgO, SrO, BaO, Y₂O₃, La₂O₃, Fe₂O₃, and mixtures thereof). The softening point is in the range of 1050°C to 1200°C.

Examples of the heat-treated silica fiber include a fiber sold under the registered trademark "BELCOTEX" after being baked, and recycled silica fiber derived from articles made of high-silica content glass fiber.

Silica fibers, which are primarily utilized in heat-resistant inorganic fiber applications, are often used in applications where they are exposed to high heat or flame. Furthermore, during the recycling process, heating at high temperatures and crushing, along with chemical processing, are often performed. The silica fiber collected from the recycled products after these processes can be used as the heat-treated silica fiber.

The temperature of the heat treatment carried out in the recycling process varies depending on the type and material of the target recycled product, but is usually 350 to 700°C in the case of collected inorganic fibers.

As these inorganic fibers, from the viewpoint of wet papermaking, staple fibers having a fiber diameter of about 1 to 13 µm, preferably about 5 to 10 µm, and a length of 1 to 50 mm, preferably 3 to 40 mm, can be used.

In the flame barrier insulating laminate of the invention, the flame barrier insulating layer is laminated with a prepreg layer that can give a desired form through heating. As a result, the flame barrier insulating layer may contain relatively long staple fibers.

### (1-2) Layered silicate

Layered silicates are composed mainly of hydrous silicate minerals with layered crystal structures, and are viscous and plastic. Specific examples include fibrous clay minerals such as sepiolite and attapulgite; and non-fibrous clay minerals such as kaolin minerals, halloysite, smectite, bentonite, vermiculite, talc, and mica.

Fibrous clay mineral is mineral powder whose particle shape, such as fiber, dendrite, needle, column, and rod, can be recognized when observed under a microscope. The aspect ratio, which is the ratio of the actual length corresponding to the fiber length to width corresponding to the fiber diameter, i.e. length/width, is 15 or more, preferably 50 or more, more preferably 100 or more, and is 2000 or less, usually 1000 or less.

Sepiolite and palygorskite are layered silicates classified as clay mineral with a fibrous morphology. The width corresponding to the fiber diameter is less than 0.1 µm, and the length (fiber length) that can be measured through microscope observation is at most about 200 µm.

The average primary particle size of these particles usually ranges from 10 µm to 100 µm, preferably from 20 µm to 70 µm. The average particle size in the specification refers to the particle size converted into a spherical equivalent based on the projected end length in two-dimensions when the fibrous form is curved or crimped. The particles with a particle size falling in the above range may be classified using a sieve based on the maximum particle size.

Sepiolite has a chain structure, similar to its layered structure, as well as a porous structure. This type of sepiolite has a large specific surface area and has high adsorbability. It exhibits thixotropic properties and becomes fibrous when disintegrated in a slurry using water as a dispersion medium. Sepiolite having these properties also exhibits plasticity and flexibility. The sepiolite slurry penetrates into a space between fibers and is dried, the resulting solidified sepiolite can act as a binder between the fibers.

As the clay mineral (layered silicate) other than the fibrous minerals, hydrous ferrosilicate minerals such as mica, kaolinite, smectite, montmorillonite, sericite, illite, glauconite, chlorite, talc, or mixtures thereof can be used. Of these, smectite, montmorillonite, bentonite, and mixtures thereof are preferably used.

Bentonite is a natural clay mineral whose main component is montmorillonite. Smectite is a general term for a group of 2:1 type minerals, including montmorillonite, stevensite, and hectorite.

The unit crystal of montmorillonite is a plate-like unit consisting of a tetrahedral sheet, an octahedral sheet, and a tetrahedral sheet (a sandwich structure in which one octahedral sheet is sandwiched between two tetrahedral sheets), and a plurality of such unit crystals are stacked to form a layered structure. Once the layered silicate absorbs a large amount of water between the layers (for example, 10 times or more the amount of water in kaolin), it can be deflocculated, and penetrate into spaces between the above-mentioned inorganic fibers. Thereafter, it is dried and solidified to become a film and can function as a binder for the fibers.

The layered silicates exist as powder having an average particle size of 300 µm or less, preferably 200 µm or less, and more preferably 10 to 100 µm, in terms of circle equivalent diameter, prior to preparation of a slurry. When mixed with water, the layered silicates become viscous, adhesive, and plastic, and can form a film by itself. Therefore, when the slurry is applied to a matter with a certain form, the clay in the slurry can solidify and coagulate in the gaps between the inorganic fibers. This behavior of the layered silicate may help to suppress the elastic recovery of a flame barrier insulating layer, and additionally, can maintain the original three-dimensional shape.

When a thermal insulating inorganic particle is contained in the flame barrier insulating layer, the layered silicate can also enhance cohesive force between the inorganic fiber and the thermal insulating inorganic particle, and moreover, can act as a binder between the inorganic fibers. As a result, the layered silicate may also assist to the thermal insulating inorganic particle held stably in the flame barrier insulating layer.

The layered silicate mineral is preferably contained in an amount of 10 to 80 parts by weight, more preferably 20 to 70 parts by weight, and further preferably 30 to 60 parts by weight, based on 100 parts by weight of the fibers. The layered silicate mineral cannot have sufficient flexibility in the absence of moisture. Therefore, unduly high content of layered silicate mineral in the flame barrier insulating layer may impair the flexibility of the laminate, making it difficult to give a three-dimensional form to the laminate.

### (1-3) Binder

The flame barrier insulating layer may further contain an organic or inorganic binder. If an organic or inorganic binder is contained in a raw material for the flame barrier insulating layer, it improves the handling property of the raw material during making a paper to be used for the layer.

Examples of the organic binder include organic fibers, powder, granule, colloidal solution and so on. Examples of the inorganic binder include water glass (sodium silicate), colloidal silica, colloidal alumina, and so on.

Examples of the organic binder having a fibrous form include pulp fibers and thermoplastic resin fibers. These organic fibers become entangled with the inorganic fibers as a main component of the flame barrier insulating layer, by the papermaking process. The organic fiber softens and melts through heating and drying in the production of the flame barrier insulating layer, thereby acting as a binder between the inorganic fibers.

Examples of the thermoplastic resin fiber includes polyester fiber, polypropylene fiber, polyethylene fiber, acrylic fiber, polyvinyl chloride fiber, vinylidene fiber, nylon fiber, vinylon fiber, and polyvinyl alcohol fiber. A thermoplastic resin fiber having a core-sheath structure in which the core fiber is covered with a resin having a lower softening temperature may also be used. Since the softening point of the thermoplastic resin fibers is in the range of around 120 to 200°C, they can melt and act as a binder during some processes in the production of the flame barrier insulating layer, as well as during a drying process in the production of the flame barrier insulating laminate and the structure made of the laminate.

In the case of using a thermoplastic resin fiber as an organic binder, a staple fiber with a fiber diameter of 3 µm to 50 µm, preferably 5 µm to 30 µm, and a fiber length of 1 to 20 mm, preferably 3 to 10 mm, are preferred. Since the thermoplastic resin fibers need to be uniformly entangled with the inorganic fibers as a main component of the flame barrier insulating layer, a thermoplastic resin fiber having a similar length to the inorganic fiber is prefered.

Besides such a fibrous organic binder, organic polymer in the form of powder or fluid, for example, latex such as acrylic latex and (meth)acrylic latex; powdery thickening substance such as polyvinyl alcohol powder and starch; a copolymer of styrene and butadiene, vinylpyridine, acrylonitrile, and a copolymer of acrylonitrile and styrene, may be used for the binder.

The organic binder may be contained in an amount sufficient to provide the flexibility required during the production of a laminate or structure, or to reduce expansion and contraction caused by temperature increase during normal use. However, if the laminate contains a very high content of organic binder, it may result in a decrease in thermal insulation properties of the flame barrier insulating structure as a finished product. Moreover, the organic binder can affect the production process of the flame barrier insulating structure by being oxidated or generating decomposed gas.

A preferable concentration of the binder in the dispersion is in the range of 1 to 20% by weight, preferably 3 to 15% by weight, and more preferably 3 to 10% by weight, in terms of solid content. When an organic binder is used, the content is preferably 15% by weight or less, more preferably 10% by weight or less, and even more preferably 7% by weight or less, for ensuring a flame barrier and thermal insulating properties.

### (1-4) Other inorganic fibers

An inorganic fiber with a heat resistance temperature of less than 1000°C may be allowed in the flame barrier insulating layer, if its content is 10% by weight or less. Examples of such inorganic fibers include general-purpose glass fibers (E glass, alkali glass, etc.), S glass fibers (heat resistance temperature: about 800 to 900°C), D glass fibers (heat resistance temperature: about 700 to 800°C), and rock wool (heat resistance temperature: about 800°C).

Glass fiber with a heat resistance temperature below 1000°C melts when exposed to flames. However, the molten materials can fill the gaps created by the shrinkage of fiber that is a main component in the flame barrier insulating layer.

The size (fiber length and fiber diameter) of other inorganic fibers is not particularly limited, but from the viewpoint of entanglement with fiber as the main component of the flame barrier insulating layer, the diameter of the staple fiber ranges from 1 to 13 µm, preferably about 5 to 10 µm, and a length of 1 to 50 mm, preferably 3 to 40 mm.

### (2) Manufacturing of a flame barrier insulating layer

The flame barrier insulating layer is in the form of sheet with a thickness of 0.1 to 3 mm, preferably 0.1 to 2.0 mm, and more preferably 0.2 to 1 mm. In the flame barrier insulating layer, inorganic fibers with a heat resistance temperature of 1000°C or higher are entangled in random directions and, if desired, the fibers are bonded to each other with an organic or inorganic binder. Specifically, a paper made from a suspension containing the above-mentioned components through wet-processing is used.

The components listed above, i.e., the inorganic fibers with a heat resistance of 1000°C or higher as a main component, layered silicate, and an organic binder as an optional component, are mixed with stirring in water as a dispersion medium to prepare a slurry (suspension).

A preferable content of solids in the slurry is chosen for the components to be uniformly stirred and mixed. Specifically, the content of solids is in the range of 0.01 to 10% by weight, preferably 0.05 to 3% by weight. Besides the above-mentioned components, the slurry may further contain an additional solid such as a thermal insulating inorganic particle as described later, in a content of less than 15% by weight, preferably 10% by weight or less, and more preferably 5% by weight or less.

The dispersion medium may be any medium in which the fibers and binder can be homogenously dissolved or dispersed, may be preferably water. In addition to water, a solvent such as aromatic hydrocarbons such as toluene, ethers such as tetrahydrofuran, ketones such as methyl ethyl ketone, alcohols such as isopropyl alcohol, N-methyl-2-pyrrolidone (NMP), dimethylacetamide, dimethylformamide, dimethylsulfoxide, may be contained in the medium, if desired.

The slurry prepared above is filtered to obtain a sheet-like product using a papermaking machine, by removing water through pressing and drying.

As the papermaking machine, a cylinder paper machine, a fourdrinier paper machine, an inclined paper machine, an inclined short wire machine, and a combination of these may be used. A cylinder paper machine, a fourdrinier paper machine, a short wire paper machine, an inclined paper machine, or a combination type papermaking machine which is a combination of the same or different types of machines selected from these, may be used. In addition to the essential components, various anionic, nonionic, cationic or amphoteric retention aid, drainage agent, dispersant, paper strength agent and thickener may be optionally added to the papermaking slurry, within the range not impairing the desired effects of the present invention.

The drying temperature is set to allow the dispersing medium to evaporate at 80°C or higher, preferably 100°C or higher, but not exceeding the decomposition temperature of the organic binder, preferably not exceeding 120°C.

### [Prepreg layer]

The prepreg layer contained in the flame barrier insulating laminate of the present invention is a prepreg sheet in which a base fabric of inorganic fiber is impregnated with a semi-cured thermosetting resin.

### (1) Inorganic fiber base fabric

The inorganic fiber used in the base fabric are not particularly limited. Any inorganic fiber usable for flame barrier insulating layer, such as an inorganic fiber with heat resistance temperature of 1000°C or higher, as well as an inorganic fiber with heat resistance temperature less than 1000°C, can be used for the base fabric.

A preferable inorganic fiber includes glass fiber and carbon fiber, which are known as a typical inorganic reinforcing fiber in a prepreg and are readily available in the market. These fibers are lightweight, easy to handle, and resistant to chemicals. A preferable glass fiber is, without limitation, a general-purpose type of glass such as E-glass fiber (glass transition point less than 800°C), considering the cost. If the affinity to the thermosetting resin as the matrix resin is required to be improved, the base fabric as well as the fibers thereof may be surface-treated.

The base fabric serves as a reinforcing fiber in the prepreg. As the reinforcing fiber, a filament with 10 mm or more length is preferably employed, however, a paper made from short fibers can be also employed as the base fabric.

Examples of the base fabric include, but are not limited, a bundle of multiple fibers, a woven or knitted fabric of fibers, a sheet in which fibers are aligned in one direction, a nonwoven fabric or paper in which fibers are entangled in random directions, or a combination of these. The type of the woven fabric includes fabrics made by plain weave, twill weave, or satin weave, but not limited thereto.

The thickness of the base fabric is usually 1 µm or more, 3 µm or more, 5 µm or more, or 10 µm or more, and usually 1000 µm or less, 800 µm or less, 500 µm or less, or 300 µm or less.

### (2) Matrix resin

The matrix resin contained in the prepreg layer is a monomer or oligomer of a phenol resin, an epoxy resin, a polyimide resin, a melamine resin, a diallyl phthalate resin, or the like, and is in a liquid or powder form. These matrix resins are known as thermosetting resin precursor, which is distinguished from a fully cured thermosetting resin.

Examples of the phenol resin include novolac type phenol resin, resol type phenol resin, aryl alkylene type phenol resin, terpene modified phenol resin, and dicyclopentadiene type phenol resin. Examples of the novolac type phenolic resin include phenol novolac resin, cresol novolac resin, and bisphenol A novolac resin.

Examples of the epoxy resin include bisphenol type epoxy resins such as bisphenol A type epoxy resin, bisphenol F type epoxy resin, bisphenol S type epoxy resin, bisphenol E type epoxy resin, bisphenol M type epoxy resin, bisphenol P type epoxy resin, and bisphenol Z type epoxy resin, or derivatives thereof; novolac type epoxy resins such as phenol novolac type epoxy resin and cresol novolac type epoxy resin; aryl alkylene type epoxy resins such as biphenyl type epoxy resin and biphenyl aralkyl type epoxy resin; naphthalene type epoxy resin, anthracene type epoxy resin, phenoxy type epoxy resin, dicyclopentadiene type epoxy resin, norbornene type epoxy resin, adamantane type epoxy resin, and fluorene type epoxy resin.

These may be used alone or in combination of two or more kinds.

The thermosetting resin precursor is cured through a crosslinking reaction upon heating or in the presence of a curing agent. in this connection, the matrix resin may contain a curing agent, a curing initiator, a reaction accelerator, etc., as necessary.

Examples of the curing agent include phenolic resin curing agents, aliphatic amines, aromatic amines, dicyandiamide, dihydrazide compounds, and acid anhydrides.

Examples of the reaction accelerator include organic metal salts such as zinc naphthenate, cobalt naphthenate, tin octoate, and cobalt octoate; tertiary amines such as triethylamine and tributylamine; imidazoles; phenol compounds such as phenol, bisphenol A, and nonylphenol; organic acids such as acetic acid, benzoic acid, salicylic acid, and paratoluenesulfonic acid; phosphorus compounds such as triphenylphosphine and tritolylphosphine; and mixtures thereof.

The base fabric's weight (basis weight) of the prepreg layer is preferably 30 to 300 g/m², more preferably 100 to 250 g/m², and further preferably 120 to 200 g/m². The resin content is appropriately selected depending on the type of resin and the type of base fabric, but is preferably 7 to 50% by weight, more preferably 10 to 30% by weight, and even more preferably 10 to 20% by weight. Since a relatively small amount of resin impregnated in the prepreg layer is preferred from the viewpoint of thermal insulation, it is preferable to combine with a flame barrier insulating layer that can contribute to enhance a bonding strength between the prepreg layer and the flame barrier insulating layer. In the case of using silica fiber containing hydroxyl groups for the flame barrier insulating layer, the amount of resin impregnated into the prepreg layer can be reduced to 15% by weight or less.

### (3) Types of prepreg layer and preparation thereof

The prepreg layer is formed by impregnating a base fabric of reinforcing fiber with the matrix resin (thermosetting resin precursor).

Examples of the impregnation method include a method of immersing the base fabric in liquid matrix resin or a dispersion containing a solid matrix resin, a method of applying the liquid resin or the dispersion on the base fabric using various coaters, and a method of spraying the matrix resin (powder or liquid thermosetting resin precursor) onto the base fabric using a sprayer.

Alternatively, a resin-impregnated fabric can be prepared by applying matrix resin in powder form, and if necessary, heating after the application to impregnate the matrix resin in partially or fully melt state.

In this manner, the base fabric is dried or heated until it is in a semi-cured state, which results in the fabric (or fibers constituting the base fabric) with the matrix resin-impregnated surface.

An individual prepreg sheet may be supplied when producing a laminate. Alternatively, a base fabric impregnated with a pre-semi-cured resin may be placed on a layer as a constituent of the laminate (e.g., a flame barrier insulating paper) and then heated to a semi-cured state.

Laminating an individual prepreg sheet with a sheet that becomes a flame barrier insulating layer is preferred, as it results in a laminate with a surface free from the matrix resin.

### [Thermal insulating inorganic particles]

The flame barrier insulating laminate of the invention may contain a thermal insulating inorganic particle that can improve the thermal insulation properties. The thermal insulating inorganic particle may be contained in either the flame barrier insulating layer or the prepreg layer, or both.

When the thermal insulating inorganic particles are contained in the flame barrier insulating layer, the thermal insulating inorganic particle may be added to the slurry used in the wet papermaking process.

When the thermal insulating inorganic particles are contained in the prepreg layer, either a liquid composition comprising a thermosetting resin precursor and a thermal insulating inorganic particle as an inorganic filler, or a dispersion containing a matrix resin and a thermal insulating inorganic particle, is used. The prepreg layer containing thermal insulating inorganic particles is prepared by immersing the base fabric in the liquid composition or the dispersion, or coating the liquid composition or the dispersion on base fabric.

Examples of the thermal insulating inorganic particles include metal oxide aerogels such as silica aerogel, alumina aerogel, titania aerogel, zirconia aerogel, and celica aerogel, and carbon aerogel, as well as porous or hollow inorganic particles such as porous particle formed by agglomeration of nanoparticles, glass bubble, and shirasu balloon; and ceramic particles capable of scattering radiant heat, such as titanium oxide, alumina, and silica having no binder function (crystalline silica powder, amorphous silica, and the like).

Among them, a ceramic particle that scatters radiant heat, and a hollow or porous inorganic silica particle that is lightweight and can exert an insulating effect based due to pore, are preferred. The silica particle, such as silica aerogel available from CABOT Corporation and Carplex (registered trademark) from Evonik Industries AG, is more preferred, because it has long, tortuous air paths that lower thermal conductivity and electrical conductivity. Either hydrophilic silica and hydrophobic silica may be used.

Porous silica particles such as silica aerogel are mesh-like aggregate (primary particle) formed by agglomeration of nano-sized silica particles (approximately 5 to 50 nm). The aggregate has nano-sized pores with a porosity of 70% by volume or more, preferably 80% by volume or more, and more preferably 90% by volume or more, and an average primary particle size of 200 nm to 100 µm, preferably 1 µm to 80 µm. Such porous silica particles are produced by a sol-gel method, a dry method (fumed silica), a wet method (precipitated silica), etc.. The particle size, aggregation state, and surface properties vary depending on the production method and production conditions. In some manufacturing methods, an aggregate with 100 µm or more to several mm in size is yielded, however, the yielded aggregate is pulverized to aggregate with the above range of particle size. The aerogel having the above-mentioned size and porosity exhibits an excellent thermal insulation due to a numerous nano-sized pores that hinder air convection, and moreover the aerogel achieves lightweight of the flame barrier insulating laminate.

The hydrophilic porous silica particles as the thermal insulating inorganic particle are easily mixed homogeneously with other components in the preparation of a slurry using an aqueous medium. In the case of preparing an aqueous slurry with hydrophobic silica particles, the hydrophobic silica particles are subjected to a surface treatment with a hydrophilic polymer (e.g. dispersant such as cellulose nanofibers, PVA fibers, or starch, and a surfactant), prior to the preparation of the slurry. The hydrophobic silica particles with such a surface treatment are preferable because the hydrophilic polymer surrounds the surface of hydrophobic particles, improving their affinity with the dispersion medium (water). This improvement allows the hydrophobic silica particles to be dispersed in a stable state in the slurry during wet papermaking.

The above-mentioned thermal insulating inorganic particles can exist in a state held by entangled multiple fibers, or can dispersed in a matrix resin. Thereby, scattering of inorganic particle powder is suppressed even during processing steps such as cutting and punching.

### [Configuration of flame barrier insulating laminate and manufacturing thereof]

### (1) Configuration of flame barrier insulating laminate

The flame barrier insulating laminate of the invention is a multilayered sheet including a flame barrier insulating layer and a prepreg layer. The configuration of these layers has already described.

The embodiments of the laminate include a laminate consisting of one flame barrier insulating layer and one prepreg layer, a laminate in which a plural of either flame barrier insulating layers or prepreg layers, preferably flame barrier insulating layers are contained, and a laminate with an intervening layer between the flame barrier insulating layer and the prepreg layer. In these embodiments, at least one side of the laminate is applied with a flame barrier insulating layer.

The flame barrier insulating laminate may have a protective film laminated thereon as a surface layer. Examples of the intervening layer include a graphite sheet and an adhesive layer.

Exemplary typical configurations of the flame barrier insulating laminate of the invention include, a two-layered laminate 10 comprising a flame barrier insulating layer 10a and a prepreg layer 10b, as shown in Fig. 1; a three-layered laminate 20 in which a graphite sheet 20c as an intervening layer is interposed between a flame barrier insulating layer 20a and a prepreg layer 20b, as shown in Fig. 2; a three-layered laminate 30 in which a prepreg layer 30b is sandwiched between flame barrier insulating layers 30a, as shown in Fig. 3; and a laminate 40 in which at least one of the outer surfaces is covered with a protective film 40d, as shown in Fig. 4. Fig. 4(a) shows an exemplary laminate 40A in which the prepreg layer 40b is covered with a protective film 40d, and Fig. 4(b) shows an exemplary laminate 40B in which the flame barrier insulating layer 40a is covered with a protective film 40d.

In these laminates, the layers may be directly bonded together or may be bonded with an adhesive layer.

Graphite sheet 20c refers to an expandable graphite sheet produced by rolling and molding expandable graphite into a sheet form. A polymer-type expandable graphite sheet obtained by graphitizing a polymer film, such as an aromatic polyimide sheet, by heating it to over 2500°C under pressure in a reduction atmosphere may also be used as the graphite sheet 20c.

A graphite sheet (expandable graphite sheet) has high thermal conductivity in the planar direction but low thermal conductivity in the thickness direction. Therefore, a graphite sheet contained in the flame barrier insulating laminate enhances the flame barrier insulating properties in the thickness direction of the laminate.

The graphite sheet usually has a thickness ranging from about 10 µm to 2 mm, depending on the production method. An appropriate thickness for the graphite sheet is 1 mm or less, more preferably 0.5 mm or less, and even more preferably about 10 µm to 200 µm (0.2 mm), due to the limitation on the overall thickness of the laminate.

The protective film 40d is placed on the outer surface of either or both of the flame barrier insulating layer and the prepreg layer, and protects them. In the case of the semi-cured prepreg sheet, it is preferred to cover its adhesive outer surface with a plastic film, which can protect it from dust, and also improve handling. Additionally, it is preferable for the flame barrier insulating layer containing thermal insulating inorganic particles to be protected with a plastic film. The plastic film can prevent particles from falling off and protecting against dust.

There are no particular limitations on the plastic film that can be used as the protective film, but typically, polyethylene film, polypropylene film, polyester film, and polyamide film, may be used. The thickness of the plastic film used as the protective film is usually about 0.5 to 50 µm, and preferably about 1 to 30 µm.

Such a protective film may be peeled off when used, or may be burned off early when used at high temperatures.

When bonding is performed using an adhesive, the adhesive used may be either an organic binder or an inorganic binder. Examples of the inorganic binder include water glass, colloidal silica, or the like. Examples of the organic binder include an acrylic adhesive or the like.

### (2) Manufacturing of flame barrier insulating laminate

The flame barrier insulating laminate of the invention can be produced, for example, by (i) laminating the films or sheets constituting layers (i.e., flame barrier insulating paper, prepreg sheet, or graphite sheet) and bonding the layers with heat and pressure; (ii) coating an adhesive on a film or sheet that serves as a substrate (i.e., flame barrier insulating paper or prepreg sheet) and laminating another film or sheet via the adhesive; or (iii) placing a base fabric in the prepreg on the flame barrier insulating paper, impregnating the base fabric with a matrix resin, and heating the matrix resin to a semi-cured state. Among these methods, (i) is preferred because it is suitable for producing a laminate including a flame barrier insulating layer with a surface where the matrix resin does not appear.

The flame barrier insulating laminate having the above-mentioned configuration is a flexible sheet with a thickness of usually 0.3 mm or more, preferably 0.5 mm or more, 0.8 mm or more, and usually 5 mm or less, preferably 3.5 mm or less, 3.0 mm or less, 2.5 mm or less, depending on the laminate's configuration and thickness of the sheet used for each layer. The thickness of the laminate can be reduced to 2 mm or less by selecting an appropriate type of layer and configuration. Additionally, applying pressure during the curing process allows for adjustment of the film's thickness to a desired level.

A laminate with a thickness exceeding 5 mm tends to lack flexibility, making it difficult to form into a three-dimensional shape. Insufficient flexibility can result in poor handling property during transport and reduced market viability.

The flame barrier insulating laminate of the invention has a flame barrier effect based on the flame barrier insulating layer. Furthermore, the laminate can be formed into a desired shape or molded under pressure as a secondary processing of the laminate. The laminate may be distributed to the user in the form of a sheet, or a three-dimensional article which is shaped from the laminate, in the market. The user purchasing the laminate sheet can shape it into a desired form.

The flame barrier insulating laminate of the invention is usually provided in the form of sheet. As the laminate is flexible, it can be conveniently transported and distributed in the form of a long strip wound around a spool or core, which is advantageous. In other words, the flame barrier insulating laminate of the invention can be distributed as a semi-finished product, and the user can process and create a finished product with a form with a part to be applied.

### <Flame barrier insulating structure>

The flame barrier insulating structure of the invention is a structure with a desired form created from the disclosed flame barrier insulating laminate. The structure is formed by fully curing the thermosetting resin of the prepreg layer in the laminate, thereby the created form is fixed.

### [Shaping and Manufacturing of Structure]

As the flame barrier insulating laminate of the invention is soft and flexible, it can be processed and molded like a common prepreg sheet. A flame barrier insulating structure with an opening, slit, and a desired two-dimensional shape is manufactured by heating and curing the laminate after conducting secondary processing, such as perforating and cutting. A flame barrier insulating structure with a three-dimensional form, such as a cylindrical shape, a bellows shape, a U-shape in cross section, or a folded U-shape in cross section, can be manufactured by heating and curing a laminate after it has been folded or by heating and curing a laminate that is spirally wound around a cylindrical core.

The heating conditions required to fix the shape through complete curing during the molding process, are determined based on the type of thermosetting resin in the prepreg layer. For example, phenol resin is typically heated at approximately 160 to 280°C for about 30 seconds to 30 minutes.

If necessary, the heating process can be combined with pressing. The pressure applied can be adjusted according to the laminate's requirements. For thin laminates pre-pressed during production, additional pressing during molding can further reduce their thickness to the desired level while shaping.

The resulting flame barrier insulating structure can be molded into a three-dimensional shape using a die, giving an excellent moldability. In addition, the three-dimensional shape retains its form without reverting to its original shape due to elastic recovery, ensuring excellent stability.

In particular, a flame barrier insulating layer containing a silica fiber having hydroxyl groups at its terminals exhibits excellent shape stability after giving a desired three-dimensional shape. This may be a result from that the silica fiber having hydroxyl groups contributes to enhance a bonding strength between the flame barrier insulating layer and the prepreg layer through heat curing.

The flame barrier insulating structure obtained as described above comprises a flame barrier insulating layer and a fiber reinforced resin layer which is a cured product of the prepreg layer.

The flame barrier insulating layer in the laminate becomes the flame barrier insulating layer in the structure. The prepreg layer after the thermosetting resin is fully cured corresponds to a fiber reinforced resin layer in the structure.

If the flame barrier insulating laminate used as the raw material comprises an additional layer (e.g., graphite sheet), the flame barrier insulating structure also comprises a corresponding layer.

The finished flame barrier insulating structure maintains the same layer arrangement as the original flame barrier insulating laminate. Therefore, if the flame barrier insulating laminate contains multiple flame barrier insulating layers, the final flame barrier insulating structure also contains multiple flame barrier insulating layers.

When the flame barrier insulating laminate includes a protective film, it is typically removed before molding. In some cases, the finished flame barrier insulating structure is supplied with the surface still covered by the protective film. The protective film may be applied to the surface of the structure after molding.

The thickness of the flame barrier insulating structure can be made thinner than that of the flame barrier insulating laminate used as the raw material. The target thickness corresponding to a thickness of the finished flame barrier insulating structure can be adjusted by choosing the pressure applied during molding. Therefore, the thickness of the structure varies depending on the thickness of the laminate used as a raw material, but is usually from 0.5 to 5.0 mm, preferably 0.5 to 3.5 mm, more preferably 0.5 to 3 mm, and even more preferably 0.5 to 2.5 mm.

In the usage of the flame barrier insulating structure with the above-mentioned configuration having a flame barrier insulating layer on only one side, the layer is positioned so as to abut against the portion requiring flame barrier.

The flame barrier insulating layer will not burn or disintegrate upon exposure to flames for 10 minutes, preventing the flame extension to its rare surface. In contrast, when the flame barrier insulating layer is used independently, the fibers which are the main component of the layer are burnt upon exposure to flame for 10 minutes, causing them to disintegrated into powder and lose their original shape. However, the flame barrier insulating structure of the invention, features a fiber-reinforced resin layer that delays the spread of the flame, allowing the laminate to retain its original shape. As a result, even after the fibers is partially burned or turned into powder, the flame barrier insulating layer within the structure continues to function effectively.

In the usage that both sides of the structure may be exposed to the flame, a laminate including flame barrier insulating layers on both sides as shown in Fig. 3 may be used. A flame barrier insulating structure having flame barrier insulating layers on both sides is preferred, a flame barrier insulating layer on one side of the structure prevents spreading of flame positioned at another flame barrier insulating layer on the other side of the structure, even if the fiber reinforced resin layer is carbonized due to the exposure to the flame.

### [Exemplary applications of flame barrier insulating structure]

The flame barrier insulating structure of the invention can be used as a partition between adjacent batteries in a battery pack in which a plurality of batteries are arranged side by side. Use of silica fibers having hydroxyl groups as the constituent fibers of the flame barrier insulating layer can delay the spread of fire to other batteries when thermal runaway occurs in one battery included in the battery module. When used as a partition wall for a battery in a battery module, a laminate having a layered arrangement in which a fiber reinforced resin layer is sandwiched between flame barrier insulating layers, as shown in FIG. 3, is preferably used.

### (1) Cylindrical flame barrier insulating structure

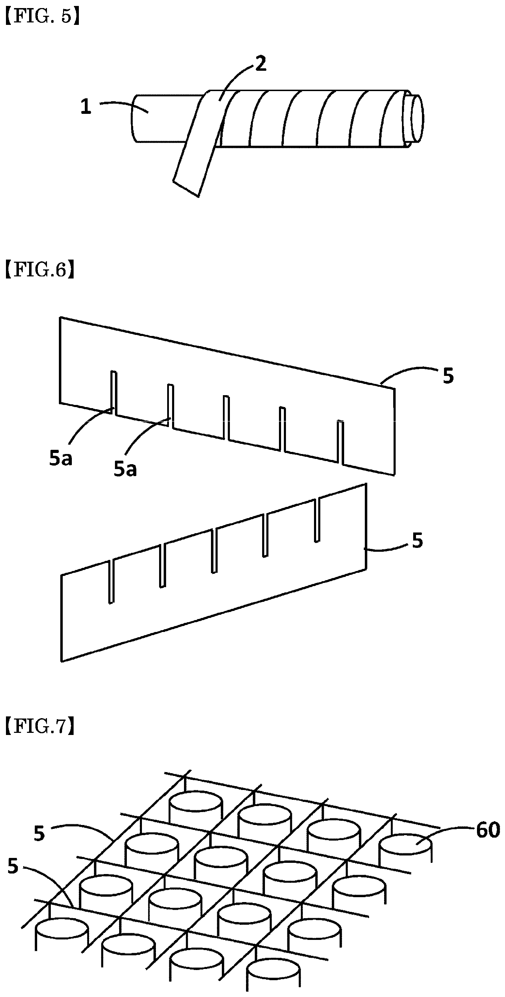

A cylindrical flame barrier insulating structure can be manufactured, for instance, by wrapping a long strip of flame barrier insulating laminate 2 around a cylindrical core 1, as shown in Fig. 5, and curing it by heat. A cylindrical flame barrier insulating structure can be used as a partition wall of a battery module in which a plurality of cylindrical batteries are arranged in parallel. Cylindrical batteries can be set one by one inside each of the cylindrical structures placed, which improves productivity of battery modules. In addition, the use of partition walls made of a flame barrier insulating structure helps to suppress thermal runaway of the batteries within the battery module.

### (2) Flame barrier insulating sheet with slits or the like formed by secondary processing

The flame barrier insulating structure 5 shown in Fig. 6 is a flame barrier insulating structure in sheet form with multiple slits 5a formed by punching or the like. The flame barrier insulating structure 5 can be used as a partition for suppressing thermal runaway in a battery module equipped with cylindrical batteries 60, as shown in Fig. 7. The partition is formed by joining the flame barrier insulating structures 5 by fitting them at their slits 5a together.

The slits in the flame barrier insulating laminate can be created either in the semi-cured sheet state or after the sheet is fully cured by being heated.

### (3) Honeycomb-shaped flame barrier insulating structure

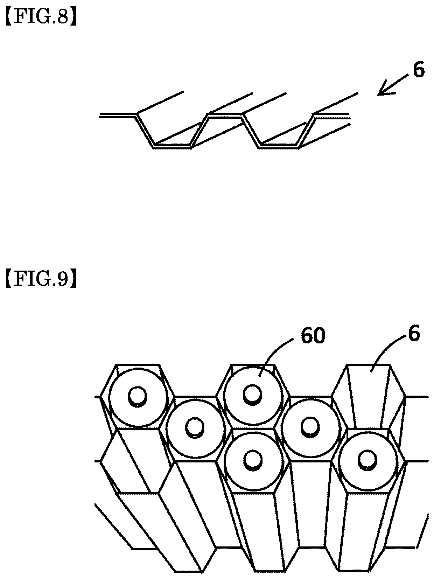

A flame barrier insulating structure 6 illustrated in FIG. 8 is formed into a corrugated shape in sectional view. For example, a honeycomb-shaped flame barrier insulating structure illustrated in FIG. 9 can be manufactured by bonding a plurality of the flame barrier insulating structures 6 to each other with an adhesive or by slot joint.

As illustrated in FIG. 9, this honeycomb-shaped flame barrier insulating structure can be used as a partition having a function of suppressing thermal runaway of a battery module including a plurality of cylindrical batteries 60 arranged side by side. As in a cylindrical partition, the honeycomb-shaped flame barrier insulating structure used as the partition for the battery module is useful for not only improvement in productivity of the battery module, but also suppression of thermal runaway of the batteries in the battery module.

### (4) Battery cover for suppressing thermal runaway

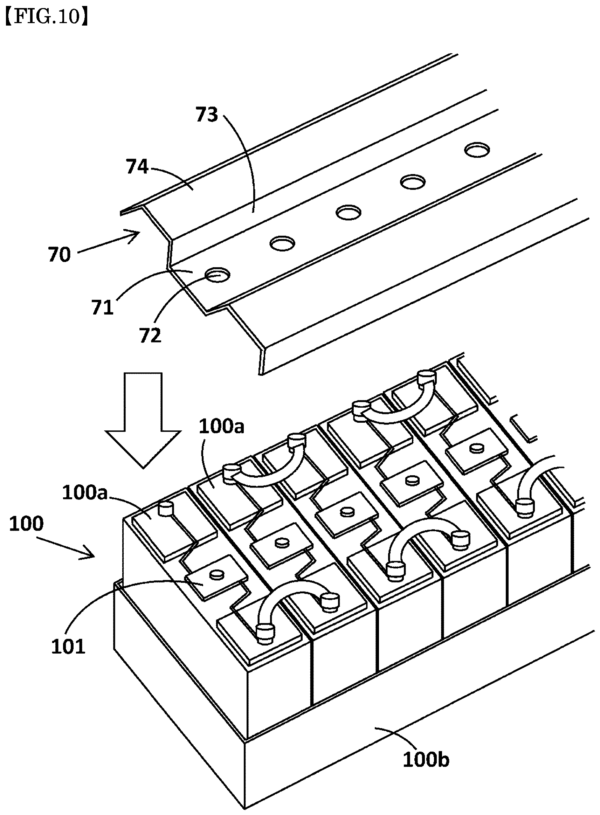

FIG. 10 illustrates a battery module 100 including a plurality of batteries 100a arranged side by side, and a housing 100b in which the plurality of batteries 100a are accommodated and packaged. FIG. 10 also illustrates a flame barrier insulating structure usable as a cover 70 covering upper surfaces of the batteries of the battery module 100. If one battery 100a, of the group of batteries (100a, 100a, ...) constituting the module, exhibits thermal runaway, a high-temperature lithium electrolyte spurts out from an upper terminal 101 of the battery cell exhibiting the thermal runaway. As a result, the high-temperature electrolyte falls onto another battery in the housing 100b, which may cause thermal runaway or ignition of the battery. The battery cover 70 can be used for preventing the high-temperature liquid (debris) spurting as described above from falling onto another battery element 100a in the same battery module 100.

The battery cover 70, which is the flame barrier insulating structure, is manufactured by applying heat and pressure using a die to the two-layered flame barrier insulating laminate 10 illustrated in FIG. 1, and then perforating the two-layered flame barrier insulating laminate 10, for example. The flame barrier insulating laminate 10 is used with the flame barrier insulating layer 10a facing the batteries. As illustrated in FIG. 10, a groove portion 71 and a weir portion 73 are formed so as to extend in a direction in which the multiple batteries are arranged side by side. The groove portion 71 and the weir portion 73 serve as a flow path through which the high-temperature liquid flows. The flow path extends in the longitudinal direction. The cured product of the prepreg layer 10b (the thermosetting resin layer) is in contact with a bottom surface of the groove portion 71, that is, the liquid flowing through the flow path. The battery cover 70 includes a bank portion 74 extending on a side opposing a groove in the weir portion.

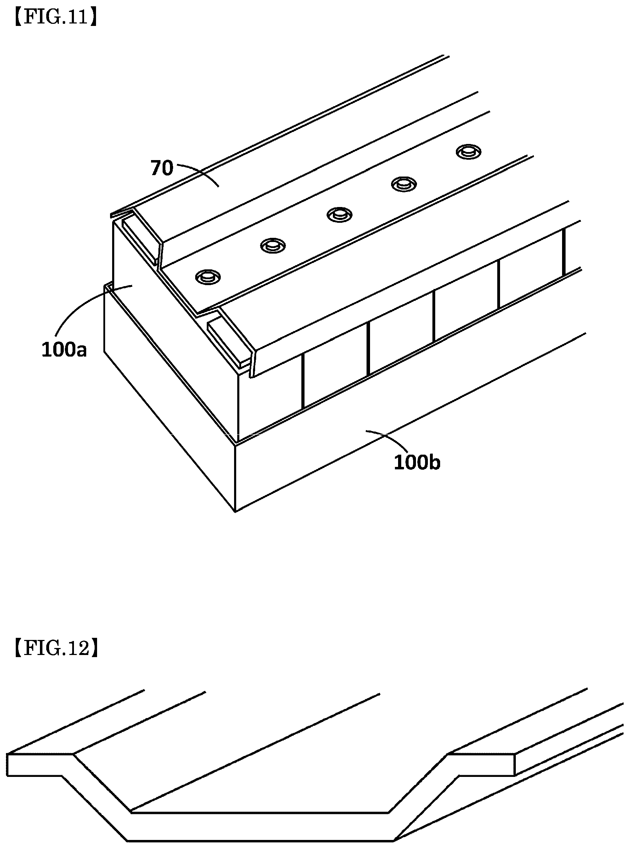

The battery cover 70 has through holes 72, 72, ... formed in the groove portion 71 at predetermined intervals, and a protrusion 101 of each battery 100a passes through a corresponding one of the through holes 72. The battery cover 70 is fixed to the upper surfaces of the batteries 100a in such a manner that the protruding terminals of the batteries 100a are inserted into the through holes 72. FIG. 11 illustrates a state in which the battery cover 70 is applied to a battery module 100 including prismatic batteries 100a arranged side by side.

The battery cover 70 applied as described above allows a high-temperature liquid spurting out from one of the batteries in the battery module to flow through the groove portion 71 serving as the flow path, to reach an outermost battery of the group of batteries arranged side by side, and to fall into a clearance between the outermost battery and the housing of the module. The battery cover 70 can thus prevent another battery of the battery module 100 from being exposed to the high-temperature liquid (debris) spurting out from the battery exhibiting the thermal runaway. In a case where the thermosetting resin layer or the flame barrier insulating layer contains heat insulating inorganic particles, the battery cover 70 is not only resistant to flame, but also blocks heat conduction from debris. The battery cover 70 can thus contribute to delaying heat conduction from a battery exhibiting thermal runaway to another battery located away from the battery exhibiting thermal runaway in the battery module 100.

The thermal runaway suppression battery cover 70 having the above-described configuration is useful in the event that high-temperature liquid spouts out from a battery in the module. The cover 70 can prevent heat transfer and the spread of fire from the problematic battery that ejects the high-temperature liquid or experiences thermal runaway to other batteries, not only those adjacent but also those located far away in the module, through the high-temperature liquid.

### EXAMPLES

### [Measurement and evaluation method]

### 1. Three-dimensional formability

The flame barrier insulating laminate was set in a mold, and then heated at 165°C for 5 minutes under pressure to produce a molded body with a groove as shown in Fig. 12.

If a three-dimensional molded body having a groove was obtained, it was rated as "OK", and if the groove was insufficiently formed or cracks or chips were found at the corners of the molded body, it was rated as "NG".

### 2. Shape stability in molded body

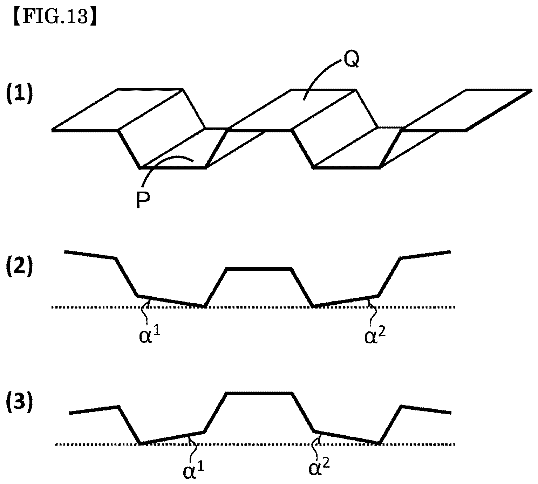

The flame barrier insulating laminate was hot-pressed at 165°C for 5 minutes to create a thermal insulating structure (molded body) as shown in Fig. 13(1). The molded body was projected in two-dimensions, and the angle α1 and angle α2, which represent the deviation between plane P and plane Q, were measured from the projection.

In the molded body with a groove shown in Fig. 13(1), the plains P and Q are parallel, and both angles α1 and α2 are 0 degrees. Fig. 13(2) and (3) show projections of a molded body with poor stability, with the corresponding angles α1 and α2 are shown. The stability of the molded body shape was evaluated based on the magnitude of these angles as follows:
⊚: The average value of α1 and α2 is less than 2°
○: The average value of α1 and α2 is 2° to 5°
△: The average value of α1 and α2 is 5° to 8°
×: The average value of α1 and α2 is more than 8°

### 3. Flame test (flame barrier property)

The flame test, in which a flame barrier insulating structure is exposed to flame (1000°C) from a burner in air, was conducted.

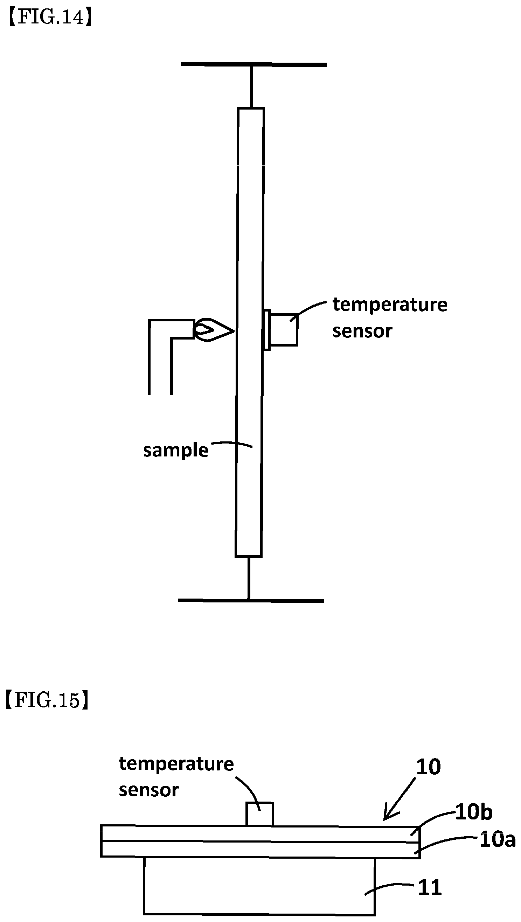

As shown in Fig. 14, which depicts the flame test, a sample (a sheet with a length of 150 mm and a width of 150 mm) was stretched using metal clips. One side of the sheet was exposed to flame for 10 minutes by a burner fixed horizontally.

The state of the flame on the surface opposite to the surface exposed to the flame, called as "back surface", and the condition of the sheet after 10 minutes were observed and evaluated according to the following criteria:
○: No flame was observed on the back surface during the burner test, and the flame barrier insulating layer remained intact after the test.
△: No flame was observed on the back surface during the burner test, and the flame barrier insulating layer remained intact after the test, but the remaining flame barrier insulating layer showed signs of disintegration, such as cracks and powdering.
×: No flame was observed on the back surface at the beginning of the burner test, but a flame was observed at the end.

### 4. Thermal insulation test 1

During the flame test, the temperature of the surface opposite the flame (back surface) was measured. A calibration curve for the relationship between the thermal insulation temperature and the thickness was prepared, and based on this, the measured temperature was converted to a temperature for a thickness of 1.6 mm. The converted temperature is shown.

### 5. Thermal insulation test 2

Thermal insulation test 2 was conducted using a two-layered flame-shielding thermal-insulating laminate (150 mm × 150 mm). As shown in Fig. 15, the laminate was placed on a hot plate (100 mm × 100 mm × thickness 10 mm) 11 heated at 700°C so that the flame barrier insulating layer 10a was in contact with the hot plate. After maintaining this state for 3 minutes, the temperature of the top surface of the prepreg layer 10b was measured with a temperature sensor.

### [Components of the flame barrier insulating laminate]

### (A) Flame barrier insulating layer (inorganic fiber paper: SF)

### (A-1) Materials

### (a) Inorganic fibers

### • Silica fiber 1

Chopped strands (fiber diameter of 9 µm, fiber length of 1 to 30 mm) of BELCOTEX (registered trademark) 110 (composition AlO_{1.5}.18 [(SiO₂)_{0.6} (SiO_{1.5}OH)_{0.4}]) from BELCHEM GmbH were used without heat treatment (unbaked silica fiber with heat resistance temperature of approximately 1050°C).

### • Silica fiber 2

Silica fiber 1 was baked at 350°C for 30 minutes (heat-treated silica fiber).

### • Silica fiber 3

Chopped strands (fiber diameter approximately 6 µm) of silica glass fiber (heat resistance temperature over 1000°C) from VALMIERA GLASS.

### • Glass fiber

E-glass fibers (fiber diameter of 9 µm and fiber length of 3 to 6 mm) were used.

### (b) Layered silicate

Sepiolite, a fibrous clay mineral (average primary particle size of 30 to 70 µm, bulk density of 0.13 to 0.15 g/ml), was used.

### (c) Binder

### • Organic fiber

As the organic fiber binder, polyester fiber (fiber diameter of 5 to 12 µm and fiber length of 3 to 6 mm) or PVA fiber (fiber diameter of 5 to 12 µm and fiber length of 3 to 6 mm) was used.

### • Inorganic binder

SNOWTEX 40 (colloidal silica in which spherical silica having an average particle size of 22 nm is dispersed) manufactured by Nissan Chemical Corporation was used.

### (d) Thermal insulating inorganic particle

Hydrophobic silica aerogel (average particle size of 30 µm) manufactured by CABOT Corporation was used.

This hydrophobic aerogel was dispersed in an aqueous solution of a hydrophilic polymer (polyvinyl alcohol), and the resulting dispersion was used for the preparation of the flame barrier insulating layer.

### (A-2) Creation of flame barrier insulating sheets

The components were added to water 2000 cc in a container in the ratios (parts by weight) as indicated in Table 1, and the resulting mixture was stirred using a mixer. The resulting mixture was made to a paper with a hand sheeting machine. After the papermaking, it was dried in an oven at 100°C for 10 minutes to obtain inorganic fiber paper (SF) with a size of 150 mm × 150 mm and a thickness shown in Table 1.

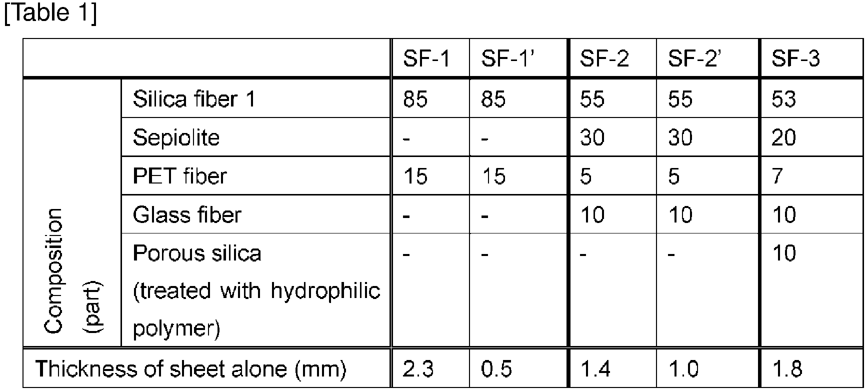

### (B) Prepreg layer

Used the following prepreg sheet including a base fabric (plain weave fabric) of E-glass fibers.

### • Prepreg sheet 1 (PR1)

Used a sheet in which the base fabric is impregnated with a resole-type liquid phenolic resin (Shounol (trade name), manufactured by Aica Kogyo Co., Ltd.). The prepreg sheet has glass fiber weight (basis weight) 200 g/m², resin content 20% by weight, and thickness 0.2 mm.

### • Prepreg sheet 2 (PR2)

A silica aerogel (average particle size of 30 µm) from CABOT Corporation as a thermal insulating inorganic particle was mixed with the liquid phenolic resin (precursor) used in prepreg sheet 1 to obtain a resin composition. The weight ratio of the aerogel to the phenolic resin in the composition ranged from 30 to 100. A base fabric was immersed in the resin composition and dried to obtain a prepreg sheet 2 with a thickness of 0.5 mm.

### • Prepreg sheet 3 (PR3)

The prepreg sheet 3 (PR3) was 0.2 mm thick, and contained 12% by weight of the liquid phenolic resin (resole type). The phenolic resin type was the same one used in PR1.

### [Preparation of flame barrier insulating laminate and its evaluation]

### Flame barrier insulating laminate Nos. 1 to 3

The inorganic fiber papers SF-1, SF-2, and SF-3 prepared above were used as sheet-shaped flame barrier insulating laminates Nos. 1 to 3, respectively.

Each inorganic fiber paper was set in a mold and pressed at 165°C for 5 minutes to produce a molded structure with a groove as shown in Fig. 12, and the three-dimensional moldability was evaluated.

### Flame barrier insulating laminate Nos. 4 to 6

The inorganic fiber paper (SF) and prepreg sheet (PR) prepared above were combined as indicated in Table 2 and pressed at 120°C for 10 seconds to obtain three-layered laminates Nos. 4 to 6 with their thicknesses shown in Table 2. In the three-layered laminates, the prepreg sheet was sandwiched between two pieces of the inorganic fiber paper corresponding to the flame barrier insulating layer. The prepreg layer and the flame barrier insulating layer were bonded together so securely that they cannot be peeled off by hand.

The three-dimensional moldability of the flame barrier insulating laminates Nos. 4 to 6 was evaluated by pressing the laminate at 170°C for 10 minutes to produce a molded structure with a groove as shown in Fig. 12. The prepreg layer in the laminate was turned into GFRP by fully curing the thermosetting resin of the prepreg, resulting in flame barrier insulating structures Nos. 4 to 6 in sheet form.

The sheet Nos. 1 to 6 as the flame barrier insulating structure were subjected to a flame test and a thermal insulation test 1. The obtained results are shown in Table 2.

| No. | | 1 | 2 | 3 | 4 | 5 | 6 |
|---|---|---|---|---|---|---|---|
| Flame barrier insulating laminate | Configuration | SF-1 | SF-2 | SF-3 | SF-1'/PR1/SF-1' | SF-2'/PR1/SF-2' | SF-2'/PR2/SF-2' |
| | Thickness (mm) | 2.3 | 1.4 | 1.8 | 1.1 | 2.4 | 2.4 |
| | Three-dimensional formability | - | NG | NG | OK | OK | OK |
| Flame barrier insulating structure | Thickness (mm) | 2.3 | 1.4 | 1.8 | 0.8 | 1.8 | 1.7 |
| | Flame test | △ | ○ | ○ | △ | ○ | ○ |
| | Thermal insulating property * (°C) | 393 | 400 | 361 | 395 | 397 | 393 |

| | | | | | | | |
|---|---|---|---|---|---|---|---|
| * Converted temperature for thickness of 1.6mm | | | | | | | |

Nos. 1 to 3 are cases where the flame barrier insulating paper was tested independently. The paper alone could have flame barrier insulting properties, however, the paper could not retain a shape which was given by simply being pressed under heat.

Nos. 4 to 6 are exemplary flame barrier insulating laminate of the invention. A three-dimensional molded structure could be produced from the corresponding laminate. In addition, the resulting flame barrier insulating structure as the molded structure demonstrated flame barrier properties in a flame test. They also exhibited their heat-insulating properties similar to those of the flame barrier insulating paper alone.

It is understood from the results of a comparison between No. 1 and No. 2, and a comparison between No. 4 and No. 5, that containing a layered silicate (fibrous clay mineral) and glass fiber in the flame barrier insulating layer (or flame barrier and thermal insulating paper) enhanced the flame resistance.

The comparison between No. 2 and No. 3 shows that adding the thermal insulating inorganic particles can further enhance the thermal insulation. When comparing No. 5 and No. 6, it was found that incorporating the thermal insulating inorganic particles into the prepreg layer improved the laminate's thermal insulating property. However, the improvement was less significant than when the thermal insulating inorganic particles were added to the flame barrier insulating layer alone.

### [Preparation of flame barrier insulating laminate and its evaluation 2]

A flame barrier insulating layer (about 1.6 mm thick) was prepared in the same manner as in (A-2) above, except that the composition of the papermaking slurry was employed as shown in Table 3.

Two types of prepreg layers (thickness 0.5 mm) were prepared by impregnating a glass fiber base fabric with phenol resin in amounts of 12% by weight or 20% by weight.

Table 3 shows combinations of a flame barrier insulating paper and a prepreg sheet, numbered as Nos. 11 to 20. The combined paper and prepreg sheet were pressed at 120°C for 10 seconds to prepare the corresponding two-layered laminates, Nos. 11 to 20.

Subsequently, the prepared laminate was hot-pressed at 165°C for 5 minutes to produce a structure with a molded body, as shown in Fig. 13(1). The molding stability of the structure was evaluated, and the results are also shown in Table 3.

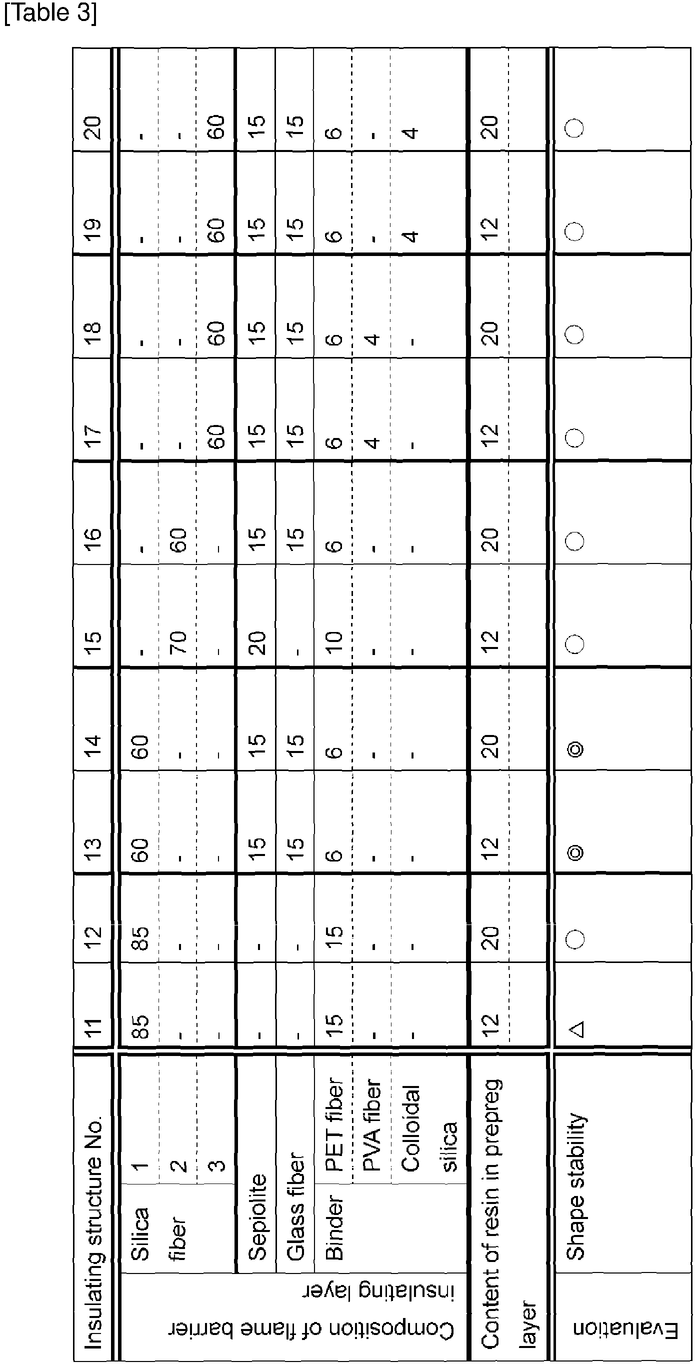

The results of flame barrier insulating structures Nos. 11 to 20 show the following:
An Increased content of the matrix resin in the prepreg layer can improve molding stability (comparison between No. 11 and No. 12). However, the added layered silicate (fibrous clay mineral) in the flame barrier insulating layer could improve molding stability without an increase in the matrix resin content in the prepreg layer (Nos. 13 to 20). When the cross sections of the flame barrier insulating structures of No. 11 and No. 13 were observed under a microscope, No. 13 was recognized that the matrix resin had intruded into the flame barrier insulating layer at the joint surface, and the addition of clay minerals was able to enhance the bonding and integration of the flame barrier insulating layer and the prepreg layer. This suggests that molding stability of the flame barrier insulating structure can be ensured even if the amount of matrix resin impregnated into the prepreg layer is reduced.

In addition, in the flame barrier insulating laminate No. 13, the matrix resin was not observed under a microscope, on the surface of the flame barrier insulating layer.

The use of silica fiber with hydroxyl groups provided better molding stability than the use of heat-treated silica fiber, as can be seen from the comparisons between No. 13 and No. 15, and between No. 14 and No. 16. This result may be due to enhanced bonding strength within the structure through a condensation reaction of some hydroxyl groups contained in the silica fibers and the matrix resin of the prepreg layer.

From the results of Nos. 15 to 20, in the case of the flame barrier insulating laminate comprising a prepreg layer, its molding stability does not appear to be significantly influenced by the type of binder as well as presence or absence of the flame barrier insulating layer, likely due to the molding of the prepreg through heating.

### [Preparation of flame barrier insulating laminate and its evaluation 3]

An inorganic fiber paper having the composition shown in Table 4 was prepared for a flame barrier insulating layer. The inorganic fiber paper (flame barrier insulating layer) was laminated with a prepreg sheet (PR3) and pressed at 120°C for 10 seconds, resulting in two-layered flame barrier insulating laminate Nos. 21 and 22. The laminates Nos. 21 and 22 were evaluated for their thermal insulation and molding stability in accordance with the above evaluation tests. In addition, the flame barrier insulating layer used in No. 21 was independently evaluated as a reference example, in accordance with the thermal insulation test 2. The results are also shown in Table 4.

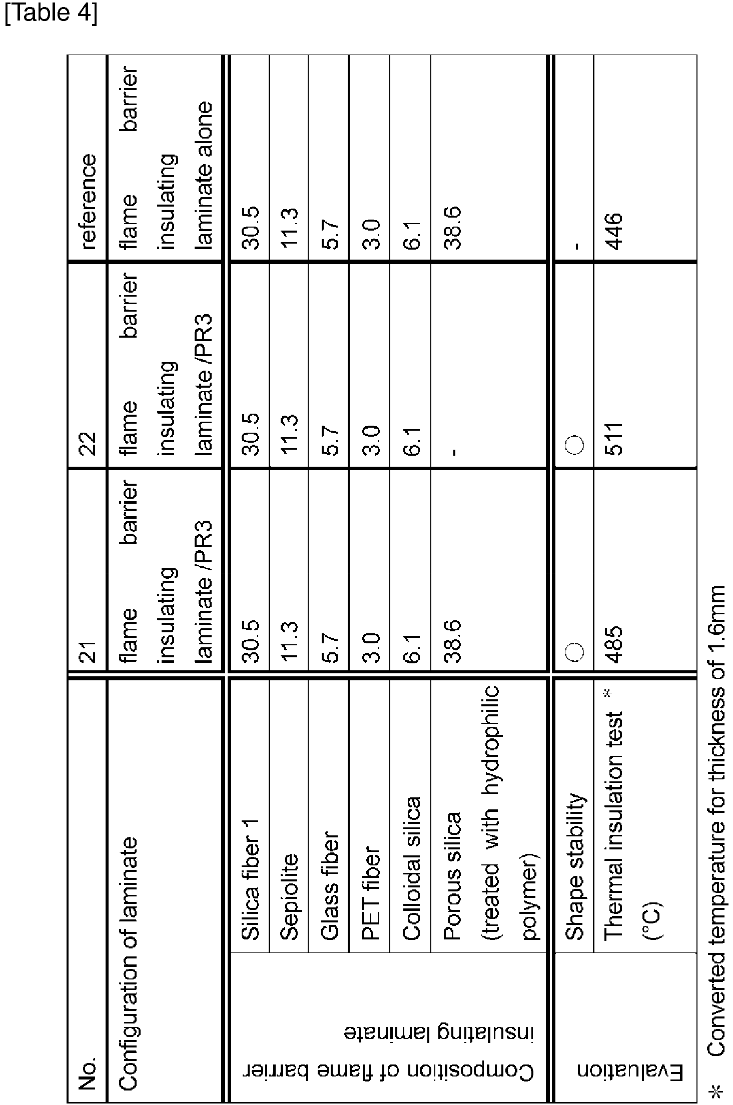

Comparison of No. 21 and No. 22 shows that when the flame barrier insulating layer contains the thermal insulating inorganic particles, the thermal insulation can be improved without impairing the molding stability. In addition, a comparison between No. 21 and the reference example shows that the presence of the prepreg layer reduces the thermal insulating property, but the temperature's decrease by 40°C in thermal insulation test was obtained by the addition of the thermal insulating inorganic particles. It is considered that the thermal insulating inorganic particles contained in the flame barrier insulating layer can provide a more effective thermal insulation than those contained in the prepreg layer.

### INDUSTRIAL APPLICABILITY

The flame barrier insulating laminate of the invention can be handled and distributed as a semi-finished sheet-like product, and users can mold it into a desired shape by applying heat and pressure. Therefore, the laminate is useful as a general-purpose flame barrier insulating material.

A flame barrier insulating structure with a desired shape produced from the flame barrier insulating laminate of the invention has flame barrier insulating properties similar to a conventional flame barrier insulating materials.

### DESCRIPTION OF CODE

5, 6 flame barrier insulating structure
2, 10, 20, 30, 40A, 40B flame barrier insulating laminate
10a, 20a, 30a, 40a flame barrier insulating layer
10b, 20b, 30b, 40b prepreg layer
20c graphite sheet
60 battery
70 battery cover (flame barrier insulating structure)
71 recess (flow path)
100 battery module
100a battery

## Claims

1. A moldable flame barrier insulating laminate comprising at least one flame barrier insulating layer and at least one prepreg layer,
wherein the flame barrier insulating layer is a sheet with a thickness of 0.1 to 3.0 mm in which inorganic fibers having a thermal resistance temperature of 1000°C or higher are entangled in a random direction, and
wherein the prepreg layer is a sheet in which an inorganic fiber base fabric is impregnated with a semi-cured thermosetting resin.

2. The flame barrier insulating laminate according to claim 1, wherein the flame barrier insulating layer and the prepreg layer are bonded together.

3. The flame barrier insulating laminate according to claim 1 or 2, wherein at least one surface of the flame barrier insulating layer corresponds to an outer surface of the flame barrier insulating laminate and wherein the surface is free of the semi-cured thermosetting resin.

4. The flame barrier insulating laminate according to any one of claims 1 to 3, wherein the inorganic fiber is a ceramic fiber or a glass fiber, each having a silica content of 40% by weight or more.

5. The flame barrier insulating laminate according to any one of claims 1 to 3, wherein the inorganic fiber comprises a silica fiber with an amorphous silica content of 85% by weight or more.

6. The flame barrier insulating laminate according to claim 5, wherein the silica fiber comprises a silica fiber containing hydroxyl groups.

7. The flame barrier insulating laminate according to any one of claims 1 to 6, wherein the flame barrier insulating layer contains a layered silicate.

8. The flame barrier insulating laminate according to claim 7, wherein the layered silicate contains a fibrous clay mineral particle.

9. The flame barrier insulating laminate according to any one of claims 1 to 8, wherein the flame barrier insulating layer further comprises an organic or inorganic binder, and wherein the flame barrier insulating layer is made of a sheet formed by a papermaking process.

10. The flame barrier insulating laminate according to any one of claims 1 to 9, wherein the prepreg layer is a sheet in which an inorganic fiber woven fabric, nonwoven fabric or paper is impregnated with a phenolic resin precursor.

11. The flame barrier insulating laminate according to any one of claims 1 to 10, wherein at least one of the flame barrier insulating layer and the prepreg layer contains a thermal insulating inorganic particle.

12. A flame barrier insulating structure with a sheet form, comprising a flame barrier insulating laminate according to any one of claims 1 to 11,
wherein the thermosetting resin of the prepreg layer in the flame barrier insulating laminate is fully cured.

13. A flame barrier insulating structure in a cylindrical form or having a folded portion, comprising a flame barrier insulating laminate according to any one of claims 1 to 11,
wherein the flame barrier insulating laminate is in cylindrical or prismatic form, and
wherein the thermosetting resin of the prepreg layer in the flame barrier insulating laminate is fully cured.

14. A three-dimensional structure comprising a three-dimensional shaped flame barrier insulating laminate,
wherein the three-dimensional shaped flame barrier insulating laminate was shaped by heating a flame barrier insulating laminate according to any one of claims 1 to 11,
wherein the three-dimensional shaped flame barrier insulating laminate has a recess serving as a flow path for high temperature liquid spurt from an element,
wherein the flow path extends along the multiple elements arranged side by side, and the high temperature liquid is guided to an end of the arranged elements.
